# DEMANDE DE BREVET EUROPEEN

(11) **EP 4 528 114 A1**
(43) Date de publication de la demande: **26.03.2025**
(21) Numéro de dépôt: 24179127.6
(22) Date de dépôt: 30.05.2024
(51) Int. Cl.: F16B 1/00, F16B 5/06, F16B 5/08, B60H 1/00

(54) **SUPPORT POUR L ÉLECTROVANNE D'UN DÉTENDEUR DE CLIMATISATION INTÉGRANT UNE PROTECTION DE SON CONNECTEUR CONTRE LES PROJECTIONS DE LIQUIDE DE FREIN**

(30) Priorité: 13.06.2023 FR 2306011
(71) Demandeur: Renault s.a.s, 92100 Boulogne Billancourt (FR)
(72) Inventeur: GHIRARDINI, Armand, 78280 GUYANCOURT (FR)

(57) **Abrégé**

Support (1) pour maintenir un ou plusieurs composants dans le compartiment moteur d'un véhicule automobile, le support (1) comprenant une patte (2) qui s'étend en longueur entre une première extrémité (3) et une deuxième extrémité (4), en largeur entre un premier bord (5) et un deuxième bord (6), et en épaisseur entre une face de liaison (7) et une face libre (8), la face de liaison (7) présentant une première portion (9) qui s'étend depuis la première extrémité (3) vers la deuxième extrémité (4) pour l'arrimage de la patte (2) à une partie du compartiment moteur, ainsi qu'une deuxième portion (10) qui s'étend depuis la deuxième extrémité (4) vers la première extrémité (3) pour l'arrimage d'un composant à la patte (2). Le support (1) comprend un déflecteur (15) qui s'étend entre une extrémité d'assujettissement (16) à la patte (2) et une extrémité libre (17), et qui s'étend en partie au moins en regard de la deuxième extrémité (4) de la patte (2).

## Description

### Domaine technique

L'invention se rapporte au domaine des véhicules automobiles routiers, et concerne plus particulièrement un support pour le maintien d'un ou de plusieurs composants dans un compartiment moteur. L'invention est utilisée, entre autres, dans les véhicules automobiles de type thermique, hybride ou électrique, notamment ceux comprenant une climatisation.

### Techniques antérieures

Il existe des véhicules routiers avec des tailles et des motorisations diverses. Certains sont destinés plutôt au transport de personnes, comme les voitures ou les autobus, d'autres sont destinés plutôt au transport de marchandises, comme les utilitaires ou les camions.

Le compartiment moteur d'un véhicule présente généralement un volume contenu qui doit néanmoins accueillir de nombreux composants. Ceux-ci sont conçus et disposés les uns par rapport aux autres pour fonctionner de manière optimale, en étant soumis à des contraintes habituelles, dans des conditions normales d'utilisation du véhicule. Cela signifie que chaque composant est prévu pour supporter des contraintes liées à sa ou ses fonctions, ainsi que des contraintes externes. Ces dernières peuvent provenir d'un ou de plusieurs autres composants, ou encore de l'environnement du véhicule. Les contraintes externes peuvent être des phénomènes mécaniques comme des vibrations, des températures très basses ou très hautes, des taux d'humidité très bas ou très hauts, ou autre.

Il est apparu aussi parfois que les composants sont soumis à des contraintes non habituelles, par exemple en cas d'une défectuosité propre, en cas d'une défectuosité d'un composant voisin, lors d'opérations d'entretien ou de réparation du véhicule, ou autre.

Il arrive que des contraintes non habituelles soient dues à l'action non souhaitée d'un fluide. En effet, pour fonctionner, certains organes utilisent un ou plusieurs fluides, qui peuvent être de nature gazeuse ou liquide. On peut citer le liquide du dispositif de freinage, le liquide de refroidissement du moteur, le liquide de nettoyage du pare-brise, le liquide de direction assistée, le liquide pour des suspensions hydrauliques, le gaz d'une climatisation, diverses huiles de lubrification ou de refroidissement, ou autre. Chaque liquide peut être renouvelé ou voir son niveau complété. Quelle que soit la raison, un remplissage du contenant d'un liquide peut être effectué. Lors d'une telle opération, il peut se faire que du liquide se répande ou soit projeté sur un ou plusieurs composants du compartiment moteur. Dans certains cas, il peut en découler des dégradations de l'un ou de plusieurs des composants concernés.

Un risque existe par exemple avec le dispositif de freinage. Lors du remplissage du réservoir de liquide de frein, il peut arriver que des gouttes ou qu'une quantité significative de liquide soit projetée ou se répande dans le compartiment moteur. Autrement dit, il peut arriver que des composants soient en contact avec du liquide de frein. Or, celui-ci est corrosif, notamment à cause d'un niveau d'acidité qui peut être élevé. De plus, le liquide de frein est très fluide, ce qui lui confère la capacité de s'infiltrer dans des passages étroits par gravité ou par capillarité. Il en résulte que le liquide de frein est susceptible d'endommager certains composants, en particulier de nature électrique. Ces composants peuvent être un connecteur, une électrovanne, un moteur ou une pompe électrique, une carte électronique, ou autre. Le liquide de frein peut altérer ou détruire des connexions électriques, ce qui rend le composant électrique non-opérationnel. En d'autres termes, le composant en cause tombe en panne, ce qui généralement provoque des pannes plus étendues. Il arrive parfois que le véhicule concerné se retrouve immobilisé.

Un exemple précis est donné pour un véhicule automobile dont le compartiment moteur héberge une quantité significative des composants d'une climatisation. Il faut tenir compte du fait que la voiture peut être prévue pour rouler à droite ou à gauche de la route, en fonction de la législation du pays de commercialisation. Dans la plupart des pays, les véhicules roulent à droite, avec le conducteur à gauche. Il en résulte que les organes nécessaires à la conduite, notamment le dispositif de freinage, sont à gauche. De fait, dans le compartiment moteur, le réservoir qui contient le liquide de frein est à gauche et plutôt vers le haut. Pour optimiser la fiabilité du véhicule, il est généralement prévu qu'aucun composant électrique ne se trouve à proximité immédiate ou en dessous du réservoir. L'idée est d'éviter la détérioration du composant par l'action du liquide de frein qui pourrait être projeté, ou couler, par exemple lors d'un remplissage du réservoir. C'est pourquoi les composants électriques de la climatisation, tels que l'électrovanne du détendeur et son connecteur, sont placés à droite dans le compartiment moteur.

Cependant, le véhicule peut aussi être adapté pour rouler à gauche, avec des organes de conduite à droite. Dans ce cas le dispositif de freinage est à droite. Pour une question d'optimisation des coûts, l'implantation de la majorité des composants est la même pour la conduite à droite et pour la conduite à gauche. Il en résulte que, pour le véhicule qui roule à gauche, le réservoir de liquide de frein se situe sensiblement au-dessus de l'électrovanne du détendeur de la climatisation et de son connecteur. Il existe donc un risque pour que ces composants électriques soient endommagés par des projections ou un écoulement de liquide de frein. En d'autres termes, il existe un risque de panne électrique sur la voiture, en relation avec le dispositif de freinage.

### Exposé de l'invention

L'invention cherche à pallier les inconvénients précités et a pour but général de réduire, voire de supprimer totalement, le risque de panne d'un composant, notamment un composant électrique, dont la source serait un liquide. L'invention vise notamment à éviter les dégradations de composants électriques qui pourraient être causées par l'action d'un liquide de frein. En particulier l'invention vise à préserver l'électrovanne du détendeur d'une climatisation, et son connecteur, de l'action du liquide de frein. Un but encore de l'invention est d'améliorer la protection des composants sans augmenter les coûts de fabrication du véhicule.

Pour ce faire, l'invention propose un support pour maintenir un ou plusieurs composants dans le compartiment moteur d'un véhicule automobile, le support comprenant une patte qui s'étend en longueur entre une première extrémité et une deuxième extrémité, en largeur entre un premier bord et un deuxième bord, et en épaisseur entre une face de liaison et une face libre, la face de liaison présentant une première portion qui s'étend depuis la première extrémité vers la deuxième extrémité pour l'arrimage de la patte à une partie du compartiment moteur, ainsi qu'une deuxième portion qui s'étend depuis la deuxième extrémité vers la première extrémité pour l'arrimage d'un composant à la patte. Le support comprend un déflecteur qui s'étend entre une extrémité d'assujettissement à la patte et une extrémité libre, et qui s'étend en partie au moins en regard de la deuxième extrémité de la patte.

Le déflecteur constitue un obstacle aux éventuels projections ou écoulements de liquides. C'est le cas par exemple pour les voitures à conduite à droite, lorsque le réservoir de liquide de frein se situe à proximité, voire au-dessus, de l'électrovanne du détendeur de climatisation et de son connecteur. Le déflecteur peut recevoir du liquide et de fait préserver l'électrovanne et le connecteur. Il en résulte que chaque composant protégé par le déflecteur conserve son intégrité, dans le sens où il ne se retrouve pas imprégné de liquide. En d'autres termes, chaque composant reste sec. Un avantage qui en découle est une fiabilité plus grande des composants, en particulier ceux de nature électrique. En effet, l'imprégnation d'un tel composant par du liquide, tel que le liquide de frein, est susceptible d'en altérer les propriétés, notamment en ce qui concerne la capacité des connexions à conduire le courant électrique. De manière plus large, la plus grande fiabilité des composants apporte une plus grande fiabilité du véhicule. Un avantage subséquent lié à la présence du déflecteur est la baisse des coûts de maintenance.

Dans une forme de réalisation, le déflecteur délimite une cavité ouverte au niveau de la deuxième extrémité de la patte. Le déflecteur protège le ou les composants solidarisés à la patte, tout en leur permettant de fonctionner dans des conditions habituelles. Par exemple, le déflecteur permet aux composants protégés de rester dans un environnement thermique stable, sans surchauffe. Cela contribue à la fiabilité.

En ce qui concerne plus précisément sa structure, le déflecteur comprend successivement une entretoise, un décrochement et un chapeau, l'entretoise s'étendant entre l'extrémité d'assujettissement à la patte et le décrochement, le chapeau s'étendant entre le décrochement et l'extrémité libre. En vue de côté, le déflecteur présente donc la forme générale d'un C, ce qui est synonyme de simplicité. Un avantage qui en découle est la facilité de fabrication.

Par exemple, le décrochement est parallèle à la patte et à l'écart de la patte, et le chapeau est parallèle à l'entretoise. Ainsi, plusieurs segments du déflecteur sont parallèles entre eux. Cela facilite l'implantation dans le compartiment moteur.

De manière non limitative, l'extrémité libre du déflecteur est située à l'écart d'un plan qui contient la patte, du côté de la face de liaison. Cela optimise la protection du composant solidarisé à la patte.

Encore de manière non limitative, la deuxième extrémité de la patte se confond avec l'extrémité d'assujettissement du déflecteur à la patte. En d'autres termes, le déflecteur et la patte se prolongent l'un l'autre. Cette structure réduit le coût de fabrication du support, et facilite son implantation dans le compartiment moteur.

La patte présente des orifices qui la traversent. Ces orifices permettent le passage d'éléments de solidarisation de la patte à d'autres parties, comme un longeron du compartiment moteur, ou le passage d'éléments de solidarisation d'un ou de plusieurs composants à la patte. Les éléments en cause peuvent être des vis, des plots, ou des moyens équivalents.

Le déflecteur comprend des languettes percées, et le chapeau présente au moins un orifice qui le traverse. Les orifices des languettes et du chapeau permettent eux aussi le passage d'éléments de solidarisation pour être maintenu dans le compartiment moteur ou pour maintenir d'autres composants en plus de celui ou de ceux déjà solidarisés à la patte. Il s'agit en fait d'augmenter la capacité de maintien du support, sur le plan quantitatif.

La patte et le déflecteur forment une pièce monobloc, laquelle peut être faite avec tout matériau adapté tel qu'un métal, un alliage métallique, une matière synthétique. Cette structure réduit le coût de fabrication du support, et facilite son implantation dans le compartiment moteur.

L'invention concerne aussi un ensemble comprenant un support et un composant électrique.

L'invention concerne encore un véhicule muni d'un support composé d'une patte et d'un déflecteur.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- [Fig.1] est une vue en perspective d'un support prévu pour maintenir un ou plusieurs composants dans le compartiment moteur d'un véhicule automobile, selon une forme de réalisation de l'invention,
- [Fig.2] est une vue en perspective du support de [Fig.1], dans un cas où il est implanté dans le compartiment moteur sous un bocal de liquide de frein,
- [Fig.3] est une vue de côté du support de [Fig.1], pour la même implantation que celle de [Fig.2],
- [Fig.4] est une vue similaire à [Fig.2], avec plus de composants,
- [Fig.5] est une vue sous une autre perspective du support de [Fig.1], pour la même implantation que celle de [Fig.2] à [Fig.4].

### Description détaillée

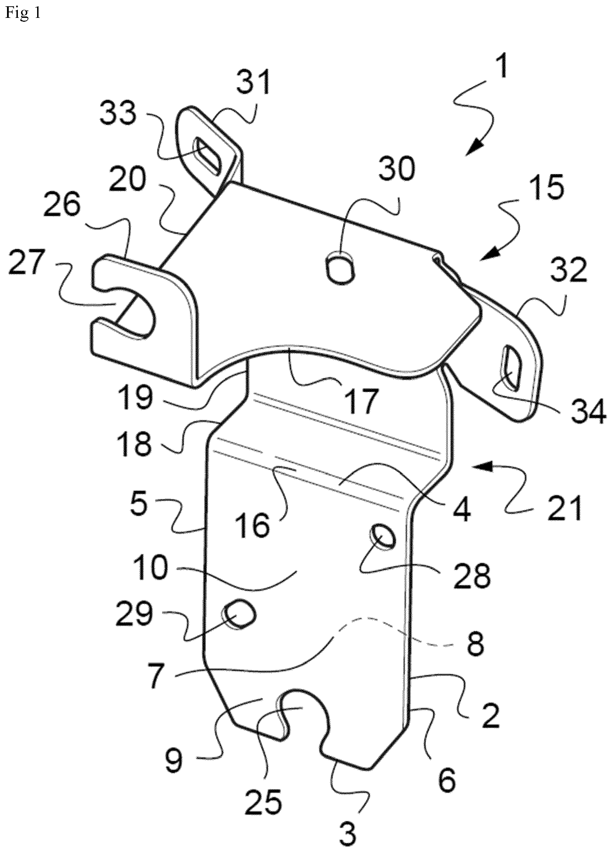

Sur la figure 1, on a représenté un support 1 pour maintenir un ou plusieurs composants dans le compartiment moteur d'un véhicule automobile.
- Le support 1 comprend une patte 2 qui s'étend en longueur entre une première extrémité 3 et une deuxième extrémité 4, en largeur entre un premier bord 5 et un deuxième bord 6, et en épaisseur entre une face de liaison 7 et une face libre 8.
- La patte 2 présente la forme générale d'une plaque. La face de liaison 7 présente une première portion 9 qui s'étend depuis la première extrémité 3 vers la deuxième extrémité 4 pour l'arrimage de la patte 2 à une partie du compartiment moteur. La face de liaison 7 présente également une deuxième portion 10 qui s'étend depuis la deuxième extrémité 4 vers la première extrémité 3 pour l'arrimage d'un composant à la patte 2. L'arrimage est une solidarisation stable qui peut être rigide ou, alternativement, présenter une certaine souplesse par exemple pour amortir des vibrations. En conséquence, la patte 2 maintient ledit composant dans une position déterminée dans le compartiment moteur.

Le support 1 comprend aussi un déflecteur 15 qui s'étend entre une extrémité d'assujettissement 16 et une extrémité libre 17, et qui s'étend en partie au moins en regard de la deuxième extrémité 4 de la patte 2. Le déflecteur 15 protège le composant arrimé à la patte 2, comme on le verra de manière plus précise plus loin. Grâce au déflecteur 15, le composant conserve au moins une grande partie, sinon la totalité, de son aptitude à remplir sa ou ses fonctions. Parmi les avantages qui en découlent, on peut citer une plus grande durée de vie du composant, une baisse des coûts de maintenance, une meilleure fiabilité du véhicule équipé du support 1.

De manière non limitative, le déflecteur 15 comprend successivement une entretoise 18, un décrochement 19 et un chapeau 20. L'entretoise 18 s'étend entre l'extrémité d'assujettissement 16 à la patte 2 et le décrochement 19, et le chapeau 20 s'étend entre le décrochement 19 et l'extrémité libre 17. Le décrochement 19 est ici parallèle à la patte 2 et à l'écart de la patte. Le chapeau 20 est parallèle à l'entretoise 18, et s'étend de part et d'autre d'un plan qui contient la patte 2. Le déflecteur 15 délimite une cavité ouverte 21 au niveau de la deuxième extrémité 4 de la patte 2. En vue de côté, le déflecteur 15 présente la forme générale d'un C. On verra mieux par la suite que cette structure facilite l'implantation du support 1 dans le compartiment moteur.

La forme de réalisation décrite prévoit que la deuxième extrémité 4 de la patte 2 se confonde avec l'extrémité d'assujettissement 16 du déflecteur 15 à la patte. En fait, le déflecteur 15 et la patte 2 se prolongent l'un l'autre pour former le support 1. En d'autres termes le support 1 est une pièce monobloc. Par exemple, le support 1 peut être constitué d'une matière métallique découpée et pliée par toute technique appropriée. Il peut s'agir d'un acier, d'un alliage d'aluminium, ou autre. Une matière métallique conduit la chaleur et l'électricité. Le support 1 peut donc contribuer à refroidir le composant porté ou à effectuer une mise à la masse si le composant utilise l'électricité. On précise en complément qu'il est possible de prévoir un support fait d'une matière synthétique laquelle, si besoin, peut être rendue conductrice par incorporation de particules conductrices.

En observant la figure 1 plus en détail, on peut voir que la patte 2 présente un orifice 25 qui traverse son épaisseur entre la face de liaison 7 et la face libre 8. L'orifice 25 débouche aussi au niveau de la première extrémité 3. Le chapeau 20 du déflecteur 15 est prolongé par une languette terminale 26. De manière non limitative, la languette terminale 26 est située au niveau de l'extrémité libre du chapeau 20, et est parallèle à la patte 2. La languette terminale 26 présente un orifice 27 qui la traverse dans l'épaisseur. L'orifice 27 débouche aussi au niveau d'un bord de la languette 26. L'orifice 25 de la patte 2 et l'orifice 27 de la languette 26 permettent chacun une solidarisation du support 1 dans le compartiment moteur. Par exemple, que ce soit pour la patte 2 ou pour la languette 26, un plot filtrant non visible sur la figure 1 peut être solidarisé à une surface du compartiment moteur et se loger en partie dans l'orifice 25, 27.

On peut voir aussi que la patte 2 présente deux orifices supplémentaires 28, 29 pour qu'un composant lui soit assujetti. Par exemple, un orifice 28 est un trou rond, tandis que l'autre orifice 29 est un trou oblong. Les orifices 28, 29 traversent chacun la patte 2 dans son épaisseur. Les orifices 28, 29 sont situés entre la première extrémité 3 et la deuxième extrémité 4, dans la deuxième portion 10 de la face de liaison 7.

Ce qui précède permet de comprendre comment le support 1 est en mesure de maintenir un composant dans le compartiment moteur. Il est malgré tout prévu, en complément, que le support 1 maintienne des composants ou des parties de composant supplémentaires.

C'est pourquoi, le chapeau 20 présente un orifice 30, par exemple de forme oblongue. L'orifice 30 traverse le chapeau 20 dans son épaisseur. On verra par la suite que l'orifice 30 participe au maintien de fils électriques.

On peut voir encore que le décrochement 19 est prolongé par une première languette latérale 31 et par une deuxième languette latérale 32. Les languettes 31, 32 se situent chacune au niveau d'un bord différent du décrochement 19. La première languette 31 est traversée par un orifice 33 dans son épaisseur, et la deuxième languette 32 est traversée elle aussi par un orifice 34 dans son épaisseur. Chaque orifice 33, 34 présente par exemple une forme oblongue. On verra plus loin que les languettes 31, 32 participent au maintien d'un tuyau.

Toujours selon la forme de réalisation présentée, la patte 2, le déflecteur 15 et les languettes 26, 31, 32 constituent une pièce monobloc.

On va maintenant décrire la coopération du support 1 avec d'autres composants dans le compartiment moteur.

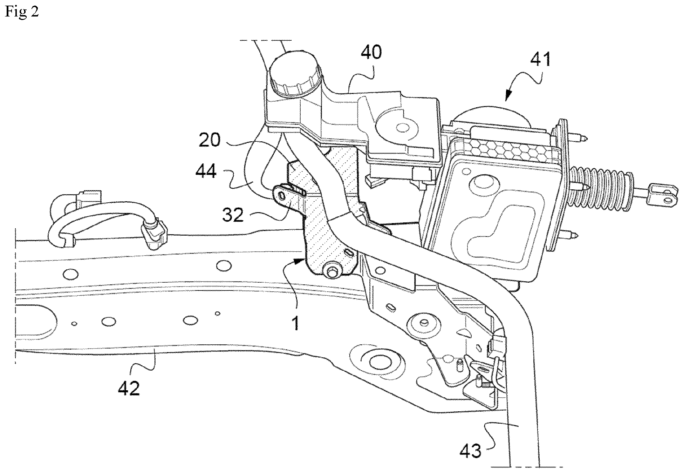

Tout d'abord, la figure 2 montre que le support 1 est disposé sous le réservoir 40 de liquide de frein d'un dispositif de freinage 41. Le support 1 est solidarisé de manière réversible, par tout moyen approprié, à un longeron 42 du véhicule. Un faisceau 43 de fils électriques passe sur le chapeau 20 du déflecteur 15, en regard de l'orifice 30. Une subdivision 44 du faisceau de fils électriques 43 rejoint un composant solidarisé au support 1 et non visible sur la figure 2.

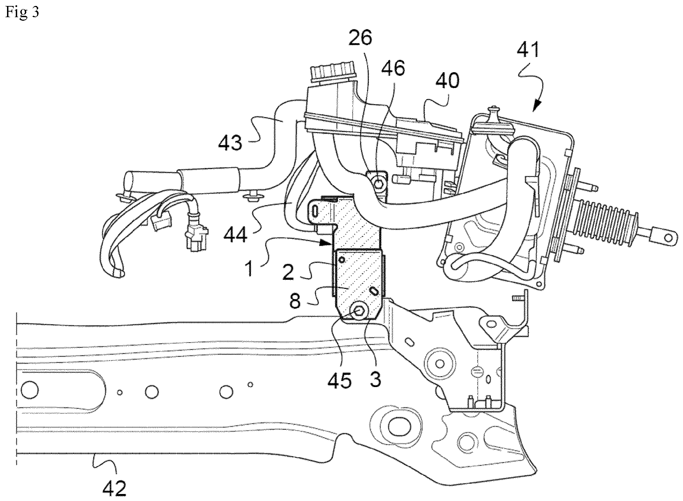

Une vue sous un autre angle est donnée par la figure 3. Ici le support 1 est montré côté face libre 8 de la patte 2. Le support 1 est solidarisé au longeron 42 par un moyen constitué par un plot élastique 45, tel qu'un silentbloc ou tout équivalent. Ce moyen 45 amortit les vibrations, ce qui améliore la fiabilité du ou des composants maintenus. Le plot élastique 45 traverse l'orifice 25 de la patte 2, au niveau de sa première extrémité 3. Dans le même esprit, le support 1 est solidarisé à une autre surface non montrée du compartiment moteur, par un moyen constitué par un plot élastique 46, tel qu'un silentbloc ou tout équivalent, là encore pour amortir les vibrations. Le plot élastique 46 traverse l'orifice 27 de la languette terminale 26 du déflecteur 15, sur le chapeau 20.

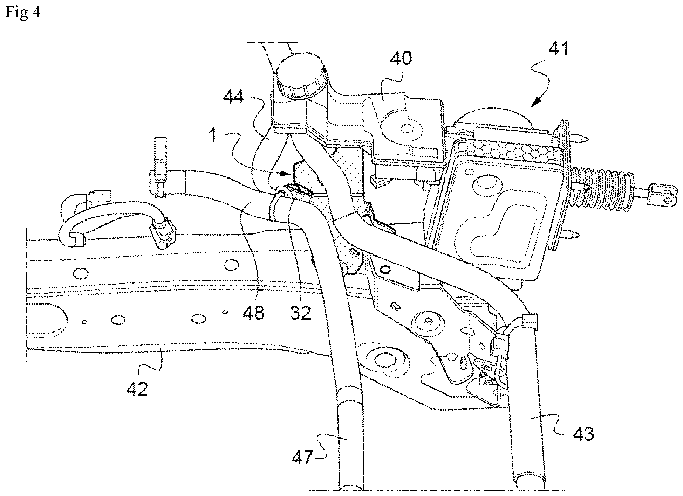

La figure 4 montre en plus le maintien d'un tuyau 47 destiné à véhiculer un liquide caloriporteur, comme de l'eau ou autre. À cet effet, un moyen de solidarisation 48 est assujetti à la languette 32 du support 1. Par exemple, le moyen de solidarisation 48 est un collier emboîté dans l'orifice 33 de la languette 32.

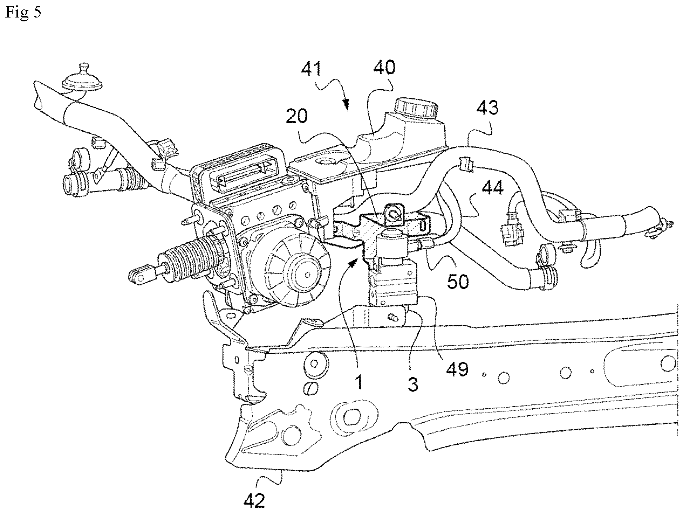

Enfin, la figure 5 montre un composant 49 solidarisé de manière réversible au support 1, plus exactement à la patte 2, du côté de la face de liaison 7. Le composant masque la patte.
- Selon la forme de réalisation présentée, le composant 49 est une électrovanne de climatisation, c'est-à-dire un composant électromécanique. Au sens large, un composant électromécanique est un composant électrique. Un connecteur 50 relie l'électrovanne 49 au faisceau de fils électriques 43 par la partie ou subdivision 44. La face de liaison 7 est en contact avec le longeron 42 par la première portion 9, et en contact avec le composant ou électrovanne 49 par la deuxième portion 10. Si l'on considère le véhicule dans les conditions normales d'utilisation, avec les roues en contact avec le sol, la première extrémité 3 de la patte 2 du support 1 est située vers le bas, par opposition au chapeau 20 du déflecteur 15 qui lui est situé vers le haut. Comme le support 1 est disposé sensiblement en dessous du réservoir de liquide de frein 40, le chapeau 20 préserve l'électrovanne 49 et le connecteur électrique 50 d'éventuelles projections ou écoulements de liquide de frein. Étant donné que le support 1 est une pièce monobloc, la fiabilité de l'électrovanne et du connecteur est améliorée pour un coût très faible.

L'invention n'est pas limitée à la forme de réalisation décrite, et comprend tous les équivalents pouvant entrer dans la portée des revendications qui vont suivre.

Notamment, il peut être prévu diverses variantes de formes pour le support 1. Par exemple, la partie qui prolonge la patte 2 depuis la deuxième extrémité 4 pourrait être formée de segments curvilignes, ou comprendre des segments droits et des segments curvilignes. Encore, l'extrémité 16 d'assujettissement du déflecteur 15 à la patte 2 pourrait être située ailleurs qu'au niveau de la deuxième extrémité 4. Il peut aussi être prévu que le déflecteur 15 et la patte 2 soient solidarisés l'un à l'autre de manière démontable, avec ou sans l'action d'un outil. La patte 2 pourrait être non plane, et s'apparenter à autre chose qu'une plaque.

## Revendications

1. Support (1) pour maintenir un ou plusieurs composants dans le compartiment moteur d'un véhicule automobile, le support (1) comprenant une patte (2) qui s'étend en longueur entre une première extrémité (3) et une deuxième extrémité (4), en largeur entre un premier bord (5) et un deuxième bord (6), et en épaisseur entre une face de liaison (7) et une face libre (8), la face de liaison (7) présentant une première portion (9) qui s'étend depuis la première extrémité (3) vers la deuxième extrémité (4) pour l'arrimage de la patte (2) à une partie du compartiment moteur, ainsi qu'une deuxième portion (10) qui s'étend depuis la deuxième extrémité (4) vers la première extrémité (3) pour l'arrimage d'un composant à la patte (2), **caractérisé par le fait qu'**il comprend un déflecteur (15) qui s'étend entre une extrémité d'assujettissement (16) à la patte (2) et une extrémité libre (17), et qui s'étend en partie au moins en regard de la deuxième extrémité (4) de la patte (2).

2. Support (1) selon la revendication 1, dans lequel le déflecteur (15) délimite une cavité ouverte (21) au niveau de la deuxième extrémité (4) de la patte (2).

3. Support (1) selon la revendication 1 ou 2, dans lequel le déflecteur (15) comprend successivement une entretoise (18), un décrochement (19) et un chapeau (20), l'entretoise (18) s'étendant entre l'extrémité d'assujettissement (16) à la patte (2) et le décrochement (19), le chapeau (20) s'étendant entre le décrochement (19) et l'extrémité libre (17).

4. Support (1) selon la revendication 3, dans lequel le décrochement (19) est parallèle à la patte (2) et à l'écart de la patte (2), et dans lequel le chapeau (20) est parallèle à l'entretoise (18).

5. Support (1) selon l'une quelconque des revendications 1 à 4, dans lequel l'extrémité libre (17) du déflecteur (15) est située à l'écart d'un plan qui contient la patte (2), du côté de la face de liaison (7).

6. Support (1) selon l'une quelconque des revendications 1 à 5, dans lequel la deuxième extrémité (3) de la patte (2) se confond avec l'extrémité d'assujettissement (16) du déflecteur (15) à la patte (2).

7. Support (1) selon l'une quelconque des revendications 1 à 6, pour lequel la patte (2) présente des orifices (25, 28, 29) qui la traversent.

8. Support (1) selon la revendication 7, pour lequel le déflecteur (15) comprend des languettes (26, 31, 32) percées, et pour lequel le chapeau (20) présente au moins un orifice (30) qui le traverse.

9. Support (1) selon l'une quelconque des revendications 1 à 8, pour lequel la patte (2) et le déflecteur (15) forment une pièce monobloc.

10. Ensemble comprenant un support (1) selon l'une quelconque des revendications 1 à 9 et un composant électrique (49).
